# EUROPEAN PATENT APPLICATION

(11) **EP 1 304 023 A1**
(43) Date of publication of application: **23.04.2003**
(21) Application number: 02079354.3
(22) Date of filing: 17.10.2002
(51) Int. Cl.: A01B 1/06

(54) **Combined hoe and rake**

(30) Priority: 22.10.2001 NL 1019203
(71) Applicant: Jordaan, Jan Gerhard Hendrik, 1251 EZ Laren NH (NL)
(72) Inventor: Jordaan, Jan Gerhard Hendrik, 1251 EZ Laren NH (NL)
(74) Representative: Visser-Luirink, Gesina, Dr.

(57) **Abstract**

Described is a tool comprising a hoe (2) and a rake consisting of a handle with teeth (3), wherein the hoe (2) and rake consist of one unit and the hoe is fixed to the outer end of at least one tooth (3) of the rake. In an advantageous embodiment the hoe (2) is fixed to the rake at an angle such that it runs parallel or approximatcly parallel to the ground surface during use. The combined hoe (2) and rake is intended in the first place for manual use.

## Description

The invention relates to a tool comprising a hoe and a rake.

In the cultivation of horticultural and agricultural land the use of a hoe to remove weeds and dead plants by means of severing thereof with a razor-sharp edge is common practice. In addition, the rake is also frequently used to turn over the soil or to gather the severed plant material so as to facilitate possible removal thereof.

A combination of a hoe and a rake can of course generally result in a more efficient use of both functions. Such a combination is for instance described in the British patent application GB 2356330, containing a rake having a hoe perpendicular thereto at the position where the rake is fixed to the handle. A drawback of this construction is that the rake function is applied at a much lower position than the hoe function, whereby the functional combination does not function optimally. A similar drawback occurs in the combinations as described and claimed in the American patent 5.609.215 and in British patent application GB 2240700. Optimum use is furthermore not made of the hoe function in these constructions, since the cutting edge thereof is not perpendicular or roughly perpendicular to the weed for removing. Finally, a complicated multifunctional garden tool is described in American patent US 1,960,894 wherein a rake, roller, paddle and disc cultivator are releasably mounted.

Not only is there a need for a simple, properly functioning hoe/rake combination; there is also a demand to make manual hoeing in the garden easier, since this can be a tiring job, especially for elderly people.

The present invention has for its object, among others, to provide a tool of the type stated in the preamble wherein optimum use is made of both the rake and the hoe function, and a method wherein this tool is applied so that hoeing is made considerably easier compared to the methods known heretofore.

The tool according to the invention has the feature that hoe and rake consist of one unit and that the hoe is fixed to the outer end of at least one tooth of the rake. This tool is further designated a combined hoe and rake. The teeth of the rake preferably form an at least almost semi-circular shape. However, a combined hoe and rake wherein the teeth of the rake have a different shape, such as for instance the teeth of the two adjacent sides of a triangle, also lies within the scope of the invention.

The hoe is preferably fixed to the outer ends of the teeth of the rake at an angle such that the hoe runs at least practically parallel to the ground surface during use. This will generally amount to an angle of about 120-150°, for instance about 135°.

The tooth part of the rake such as applied in the combined hoe and rake according to the invention consists of a minimum of two teeth, normally between four and ten teeth.

The method of fixing the hoe to the rake is not essential. A construction of hoe and rake to form an integrally combined hoe and rake is recommended from strength and design considerations. But it is also possible to envisage the outer end of a tooth or the outer ends of a plurality of teeth of the rake being welded onto the hoe.

The material from which the combined hoe and rake is made is not critical. When the combined hoe and rake consists of one unit, steel and in particular aluminium are recommended as being light in use.

During manual use in working a plot of land, the user will pull the combined hoe and rake towards him, whereby the ground for working is first hoed with the pulling movement and then turned over without extra effort using the rake part. This very efficient manner of working saves energy, which is of particularly great importance for older people who want to continue maintaining their own garden for as long as possible.

The present invention will be further elucidated hereinbelow with reference to the following figures, in which:
figure 1 is a perspective view in the working position of a combined hoe and rake (1) with hoe (2) and teeth (3) of the rake,
figure 2 is a side view of a combined hoe and rake (1) as shown in figure 1.

The figures are purely schematic and not drawn to scale. Some dimensions in particular are highly exaggerated for the sake of clarity.

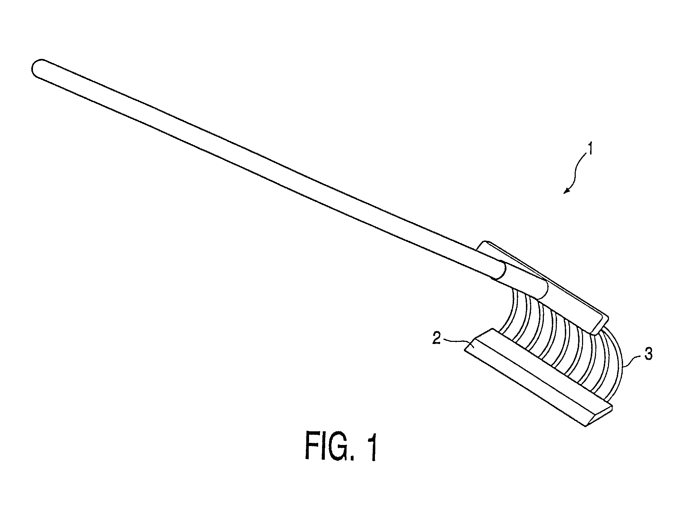

In order to clearly illustrate the hoe (2) part, the combined hoe and rake is shown in figure 1 in the working position. If the combined hoe and rake is stuck into the ground, the user will first remove the weeds as he pulls the combined hoe and rake towards him, whereafter the ground is further turned over by the teeth (3) of the rake function. The form of the teeth of the rake is not essential: both the roughly semi-circular form as shown in the figures and an optionally partly triangular form suffice as part of the combined hoe and rake. The hoe should however preferably be fixed to the teeth of the rake at an angle such that during use the hoe runs at least almost parallel to the ground surface so that it is directed with the knife edge at least practically horizontally toward the user.

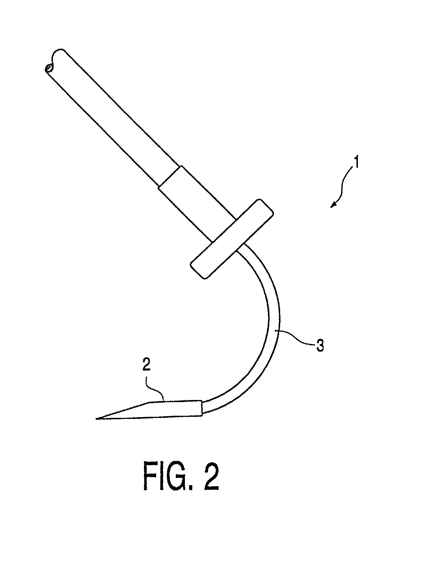

Figure 2 shows a similar combined hoe and rake as shown in figure 1, but then as seen from the side.

Although the invention is further elucidated in the foregoing with reference to only two embodiments, it will be apparent that the invention is not limited thereto. It is for instance also possible to envisage fixing a plate with the form of a hoe to the rake of a croupier. The cards or chips being raked together can then be collected on such a plate in practical manner and without additional effort.

## Claims

1. A tool comprising a hoe and a rake consisting of a handle with teeth, **characterized in that** the hoe and rake consist of one unit and that the hoe is fixed to the outer end of at least one tooth of the rake.

2. A tool according to claim 1, **characterized in that** the teeth of the rake form an at least almost semi-circular shape.

3. A tool according to claim 1 or 2, **characterized in that** the hoe is fixed to the rake at an angle such that it runs at least practically parallel to the ground surface during use.

4. A tool according to claim 3, **characterized in that** the hoe is fixed to the outer ends of the teeth of the rake at an angle of about 120-150°.

5. Method for working a piece of land, **characterized in that** a tool according to any of the previous claims is applied.
